# NEUE EUROPÄISCHE PATENTSCHRIFT

(11) **EP 1 063 462 B2**
(45) Veröffentlichungstag und Bekanntmachung des Hinweises auf die Entscheidung über den Einspruch: **08.04.2009**
(45) Hinweis auf die Patenterteilung: 31.05.2006
(21) Anmeldenummer: 00107915.1
(22) Anmeldetag: 13.04.2000
(51) Int. Cl.: F16L 33/207

(54) **Verbindungsvorrichtung mit einem Kunststoffformteil**
Connecting piece with a plastic fitting
Dispositif de raccord avec une pièce en plastique

(30) Priorität: 24.06.1999 DE 19929010
(43) Veröffentlichungstag der Anmeldung: 27.12.2000
(73) Patentinhaber: FRÄNKISCHE ROHRWERKE, GEBR. KIRCHNER GmbH & Co., D-97486 Königsberg (DE)
(72) Erfinder: Burkard, Johannes, 97486 Königsberg (DE); Johannes, Ralf, 97424 Schweinfurt (DE)
(74) Vertreter: Schwabe - Sandmair - Marx

(56) Entgegenhaltungen:
- EP-A- 0 728 979
- EP-A- 0 879 985
- DE-U- 29 621 271
- DE-U- 29 701 223
- DE-U1- 29 901 935

## Beschreibung

Die Erfindung betrifft eine Verbindungsvorrichtung mit einem Kunststoffformteil zur Halterung eines Leitungsverbindungsabschnittes an der Verbindungsvorrichtung gemäß dem Oberbegriff des Patentanspruchs 1.

Im Stand der Technik ist es bekannt, Rohrleitungen und insbesondere Verbundrohre über eine Verbindungsvorrichtung an Geräte oder an Leitungsverlängerungen anzuschließen. Dabei werden die Rohrleitungen auf Stützhülsen aufgeschoben, bis sie an einen Anschlag der Verbindungsvorrichtung anstoßen. Eine Presshülse wird über der Stützhülse und dem auf die Stützhülse aufgeschobenen Rohrleitungsende vorgesehen. Anschließend wird die Presshülse mit einem passenden Werkzeug verpresst. Die Rohrleitung wird so an der bekannten Verbindungsvorrichtung festgelegt.

Aus der DE 43 04 680 C2 ist eine Verbindungsvorrichtung bekannt, bei der die Presshülse an der Stützhülse bzw. an deren Anschlag über ein Kunststoffformteil gehalten wird. Das Kunststoffformteil umgreift ein Ende der Presshülse und einen eventuell speziell ausgebildeten Abschnitt der Stützhülse nahe des Anschlages, um so die Presshülse unverlierbar an der Stützhülse bzw. am Anschlag zu halten. Diese Verbindungsvorrichtung ist besonders zum Anschließen von Kunststoff-Metall-Kunststoff-Verbundrohren geeignet.

Dieser Stand der Technik hat jedoch diverse Nachteile. Werden beispielsweise erfindungsgemäße Verbindungsvorrichtungen mit vormontierter Presshülse auf der Baustelle stark beansprucht, beispielsweise wenn diese versehentlich fallengelassen werden, so werden die Presshülsen deformiert, da die Presshülsen fest in den Kunststoffformteilen gehalten werden. Das Einführen eines Rohrendabschnittes kann auf diese Weise erschwert und häufig sogar unmöglich gemacht werden.

Da die Spannkräfte, die von dem Kunststoffformteil aufgebracht werden, durchaus erheblich sind, kann es je nach Kraft einer Bedienungsperson unmöglich sein, von einer vormontierten Verbindungsvorrichtung die Presshülse zu lösen, um eine Ersatzpresshülse vorzusehen. Die vormontierte Verbindungsvorrichtung ist dann insgesamt unbrauchbar.

Die vormontierten Verbindungsvorrichtungen werden sehr häufig auf Lager produziert und über längere Zeiträume auf Lager gehalten. Dabei werden die Kunststoffformteile im Hinblick auf die Eigenschaften bzw. Qualität des Kunststoffes häufig spröde und versteifen sich. Darüber hinaus werden die in der vormontierten Verbindungsvorrichtung regelmäßig vorgesehenen O-Ringdichtungen schwergängig und es wird dem Bedienungspersonal häufig die Montage eines Rohrleitungsendes an der vormontierten Verbindungsvorrichtung erschwert oder sogar unmöglich gemacht. Hier ist es gut, wenn sich die Presshülse entfernen lässt, um die O-Ringdichtüngen auszutauschen, zu fetten oder dergleichen.

Die besagten Nachteile des Standes der Technik treffen insbesondere für große Rohrdurchmesser zu, da die Spannkräfte, die das Kunststoffformteil aufbringen muss, um die Presshülse sicher halten zu können, umso größer werden, umso größer die Presshülse ist.

Die EP-A 879 985 offenbart eine verpressbare Verbindungsvorrichtung nach dem Oberbegriff des Patentanspruchs 1 mit einem Rohrfitting mit Anschlussstutzen zur Verbindung mit einem Installationsrohr. Ein Schnappring verbindet einen Kontakt zwischen dem Aluminiumkern in der Rohrwand und dem Fitting, der zum Beispiel aus Messing gefertigt ist. In den Schnappring schnappt eine Presshülse ein, die die Rohrverbindung manschettenartig umgibt.

Die EP-A-728979 betrifft eine abdichtende Verbindung eines Kunststoffrohres mit einem aus Metall gefertigten Anschlussstück. Ein im Verbindungsbereich liegendes Ende des Kunststoffrohres ist mittels einer Presshülse auf einen zylindrischen Abschnitt des Anschlussstückes aufgepresst. Die Presshülse ist über einen Haltering in axialer Richtung festgelegt, wobei der Haltering in eine Rastnut des Anschlussstückes eingeschnappt ist.

Aus dem DE-U-29 701 223 ist ein Verbindungsstück bekannt, insbesondere mit Gewindeanschluss, zum Verpressen mit dem Ende eines Rohres. Ein Isolierring umfasst einen Ringwulst, der auf der Presshülse aufsitzt. Eine formschlüssige Verbindung in Form einer Ringnut in der Presshülse und einer ringförmigen Rippe im Ringwulst sorgen für die axiale Fixierung des Isolierringes auf der Presshülse. Das zylindrische Teil greift formschlüssig im Ansatzbereich der Stützhülse an.

Es ist dementsprechend eine Aufgabe der vorliegenden Erfindung, eine Verbindungsvorrichtung vorzuschlagen, die die oben aufgeführten Nachteile des Standes der Technik wenigstens teilweise ausräumt. Insbesondere soll eine Verbindungsvorrichtung vorgeschlagen werden, bei der insbesondere für größere Durchmesser ein Spielraum geschaffen wird, um einen Leitungsverbindungsabschnitt, beispielsweise eine Presshülse, gegenüber einer Leitungsverbindungseinrichtung, die eine Stützhülse und einen Anschlag umfasst, verschwenken bzw. leicht abwinkeln zu können.

Diese Aufgabe wird mittels einer Verbindungsvorrichtung mit den im Patentanspruch 1 aufgeführten Merkmalen gelöst.

Zweckmäßige Ausführungsformen der erfindungsgemäßen Gegenstände werden durch die Unteransprüche definiert.

Die Erfindung weist den Vorteil auf, dass der Leitungsverbindungsabschnitt, nachfolgend Presshülse genannt, gegenüber einer Stützhülse der Leitungsverbindungseinrichtung verkippt werden kann. Fällt die vormontierte Verbindungsvorrichtung auf die Presshülse, kann diese in einem ausreichenden Umfang ausweichen; ohne so deformiert zu werden, dass sie ihrem eigentlichen Zweck nicht mehr zugeführt werden kann.

Außerdem ermöglichen es die erfindungsgemäß ausgebildeten Gegenstände, die Presshülse abzuziehen und nach Bedarf auszuwechseln oder den Bereich unterhalb der Presshülse für die Bedienungsperson zugänglich zu machen.

Erfindungsgemäß ist das Kunststoffformteil so ausgebildet, dass sich zwischen einem Bereich des Außenumfanges der Presshülse und des Innenumfanges des Kunststoffformteils ein Freiraum ergibt. Durch diesen Freiraum kann der Spielraum erweitert werden, der der Presshülse gegenüber der Stützhülse vorgegeben wird.

Die DE 299 01 935 U1 betrifft ein Leitungssystem mit einem Metall-Kunststoff-Verbundrohr und einem Anschlusselement, das mit dem Verbundrohr koppelbar ist und einen eine Anlagefläche für eine Stirnfläche des Verbundrohres bildenden Anschlag aus einem leitfähigen Material aufweist.

Darüber hinaus ist es von Vorteil, wenn das Kunststoffformteil eine bevorzugt elastische Verformung ermöglicht. Die Presshülse kann auch in diesem Fall bereits aufgrund der elastischen Eigenschaften des Kunststoffes des Kunststoffformteils eine Auslenkung der Presshülse gegenüber der Stützhülse zulassen.

Besondere Vorteile können sich auch ergeben, wenn das Kunststoffformteil wenigstens entweder an der Presshülse oder an der Stützhülse bzw. dem dieser zugeordneten Anschlag angespritzt, angeklebt oder dergleichen wird.

Wenn das Kunststoffformteil gemäß der Erfindung als separates Teil ausgebildet wird, kann an dem zweiten Halteabschnitt des Kunststoffformteils, das der Stützhülse bzw. dessen Anschlag oder Bund zugeordnet ist, mit einem radial einwärts ausgerichteten Eingriffsabschnitt versehen sein, um mit der Leitüngsverbindungseinrichtung in einen Halteeingriff treten zu können. Dieser Halteeingriff kann durch eine Verrastung bewerkstelligt werden.

Um die Lage der Presshülse innerhalb des Kunststoffformteils bzw. die Lage des Rohrleitungsendes auf der Stützhülse oder innerhalb der Presshülse überwachen zu können, kann das Kunststoffformteil mit einem oder mehreren Sichtfenstern versehen sein, die in einem Übergangsbereich zwischen dem ersten Halteabschnitt und dem zweiten Halteabschnitt des Kunststoffformteils vorgesehen werden können.

Eine vorteilhafte Ausgestaltung der erfindungsgemäßen Verbindungsvorrichtung sieht vor, dass der Leitungsverbindungsabschnitt, bevorzugt eine Presshülse, an einem der Erstreckung des Kunststoffformteils zugeordneten axialen Ende am Außenumfang eine Erstreckung aufweist, die an dem Innenumfang des Kunststoffformteils anliegt. Diese Erstreckung an der Presshülse in Verbindung mit der Erstreckung am Kunststoffformteil lässt einerseits ein Verschwenken bzw. Verwinkeln der Presshülse gegenüber der Stützhülse zu, fördert andererseits jedoch die Haltekraft, mit der die Presshülse innerhalb des Kunststoffformteils gehalten wird. In Verbindung mit dem Freiraum, der zwischen dem Außenumfang der Presshülse und dem Innenumfang des Kunststoffformteils gelassen wird, lassen sich die genannten Eigenschaften bzw. Vorteile noch betonen.

Vorteilhafterweise hat die Erstreckung an dem Leitungsverbindungsabschnitt bzw. an der Presshülse eine axiale Ausdehnung. Besonders vorteilhaft sind die Eigenschaften der erfindungsgemäßen Verbindungsvorrichtung, wenn der Freiraum in seiner axialen Abmessung in etwa 1/2-mal so groß bis etwa 1,5-mal so groß ist wie die diesen teilweise ausfüllende Erstreckung des Leitungsverbindungsabschnittes bzw. der Presshülse in der gleichen axialen Richtung. Diese Kombination ermöglicht es in besonders hervorzuhebendem Maße, dass die Haltekraft, die zwischen der radial einwärts ausgerichteten Erstreckung des Kunststoffformteils und der Presshülse aufgebracht wird, relativ klein ist, während die Haltekraft zwischen der radial auswärts gerichteten Erstreckung an der Presshülse und dem diesem zugeordneten Bereich des Kunststoffformteils vergleichsweise groß ist, so dass eine Verschwenkung der Presshülse gegenüber der Stützhülse möglich ist, jedoch die Presshülse immer noch über das Kunststoffformteil fest an dem Bund bzw. dem Anschlag oder der Stützhülse gehalten wird, wobei bevorzugt ein Verrutschen der Presshülse in dem Kunststoffformteil verhindert werden kann.

Das Herausziehen der Presshülse kann insbesondere auch dadurch verhindert werden, dass die radiale Erstreckung der Presshülse bei axial auftretenden Zugkräften die radiale Erstreckung an dem Kunststoffformteil hintergreift.

Vorteilhafterweise ist die Presshülse auf der der Erstreckung gegenüberliegenden Seite aufgeweitet, um das Einführen eines Leitungs- bzw. Rohrendes zu erleichtern. Selbst wenn die Presshülse leicht deformiert sein sollte, kann ein Rohrende aufgrund der leicht trichterartig ausgebildeten Aufkelchung der Presshülse immer noch zwischen diese und die Stützhülse eingeführt werden.

Natürlich kann auch die Presshülse selbst mit einem oder mehreren Sichtfenstern versehen sein, um die Lage des Rohrendes bzw. der Presshülse gegenüber der Stützhülse überwachen zu können.

Die Presshülse kann auf der dem Kunststoffformteil zugeordneten Seite am axialen Ende am Außenumfang zulaufend ausgebildet sein. Auf diese Weise kann die Stützhülse besser in das Kunststoffformteil eingesetzt werden, da das zulaufende Ende der Presshülse die insbesondere radial einwärts ausgerichtete Erstreckung am Kunststoffformteil auszulenken vermag.

Entsprechend ist es vorteilhaft, wenn das Kunststoffformteil an der Erstreckung mit einer Form versehen ist, die das Einstecken der Presshülse in das Kunststoffformteil erleichtert. Eine derartige Form kann beispielsweise radial einwärts zulaufen, so dass ganz besonders in Verbindung mit der korrespondierenden Form der Presshülse die Erstreckung am Kunststoffformteil nach außen ausgelenkt werden kann.

Die Stützhülse der erfindungsgemäßen Verbindungsvorrichtung kann mit Nuten oder Rillen ausgebildet sein, in die durch Verpressen der Presshülse das Material eines anzuschließenden Rohrendes hineingelenkt werden kann. Diese Nuten oder Rillierungen können vollkommen herkömmlich ausgebildet sein oder sie können auch gemäß der DE 198 28 141.2 ausgebildet sein, deren Inhalt ausdrücklich durch Bezugnahme auch zum Inhalt der vorliegenden Offenbarung gemacht wird.

Die gemäß der Erfindung vorgeschlagenen Gegenstände bieten zudem die Vorteile, dass beispielsweise bei einer beengten Montagesituation ein Verkippen eines Rohres gegenüber der Stützhülse durch die Möglichkeit des Verkippens bzw. Verwinkelns der Presshülse gegenüber der Stützhülse ermöglicht wird. Wenn ehemals sogar Stemmarbeiten erforderlich waren, um in bestimmten, sehr beengten Montagesituationen Rohrenden auf Stützhülsen bei entsprechenden Verbindungsvorrichtungen zusammenzuführen, ist dies gemäß der Erfindung nicht mehr nötig. Auch ist es bei sämtlichen Rohrdurchmessern bzw. Durchmessern von Presshülsen gemäß der Erfindung möglich, die Presshülse von Hand von dem Kunststoffformteil zu trennen, um beispielsweise spröde oder zerstörte O-Ringe auszutauschen oder die Presshülse selbst, die eventuell beschädigt oder deformiert sein könnte, auszuwechseln. Dies war gemäß dem Stand der Technik nicht möglich, insbesondere wenn es sich um große Fitting-Durchmesser handelte.

Nachfolgend wird die vorliegende Erfindung anhand einer bevorzugten Ausführungsform näher beschrieben. Dabei werden weitere Merkmale und Vorteile sowie Zielsetzungen gemäß der Erfindung offenbart.

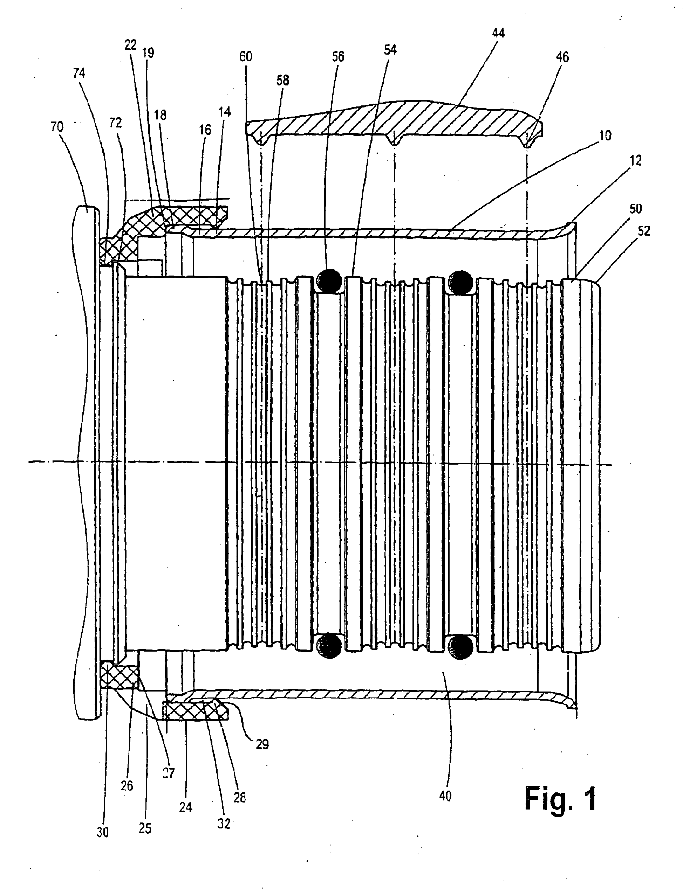

Die einzige Figur, die Fig. 1, zeigt eine teilweise längsschnittliche Darstellung, bei der eine Presshülse nebst einem Kunststoffformteil, die gemäß der Erfindung ausgebildet sind, in einer Schnittdarstellung wiedergegeben sind, während die verbleibenden Teile der Verbindungsvorrichtung in einer Seitenansicht wiedergegeben sind.

Gemäß Fig. 1 wird eine Presshülse 10 über ein Kunststoffformteil 22 an einer Stützhülse 50 bzw. an dem daran angrenzenden Bund 70 gehalten.

Die Presshülse 10 weist an ihrem dem Bund 70 bzw. dem Kunststoffformteil 22 zugeordneten Ende eine radial nach außen ausgerichtete Erstreckung 18 auf. Diese Erstreckung 18 kann vollumfänglich oder auch abschnittsweise umfänglich ausgebildet sein. Im Anschluss an diese Erstreckung 18 der Presshülse 10 wird der Außendurchmesser der Presshülse bereits in einem Bereich 16 so reduziert, dass sich zwischen dem Außenumfang der Presshülse 10 und dem Innenumfang des Kunststoffformteils 22 ein Freiraum 32 ergibt, der dabei behilflich ist, eine Bewegung der Presshülse gegenüber der Stützhülse zu ermöglichen. Andererseits kann die Erstreckung 18 an der Presshülse eine ausreichende Haltekraft aufbringen, um die Presshülse 10 innerhalb des Kunststoffformteils 22 zu halten.

Auf der dem Kunststoffformteil 22 abgewandten Seite der Presshülse 10 ist eine Aufstülpung 12 vorgesehen, die das Einführen eines Rohrendes zwischen die Presshülse 10 und die Stützhülse 50 in einen Freiraum 40 erleichtern soll.

Die Stützhülse 50 läuft stirnseitig zu, so dass analog zu dem aufgestülpten bzw. aufgekelchten Bereich 12 für einen Rohrendabschnitt ebenfalls ein Einfädelungsbereich 52 vorgesehen ist. Für die Festlegung des Rohrendes dienen Rillen bzw. Nuten 60 und diesen zugeordnete Grate 58. O-Ringdichtungen 56 sorgen für die Dichtheit der dargestellten Verbindungsvorrichtung im Zusammenschluss mit dem anzuschließenden Rohrende.

Wie bereits ausgeführt, kann die Haltestruktur auf der Stützhülse gemäß der DE 198 28 141.2 aber auch herkömmlich ausgebildet sein.

Das Kunststoffformteil 22 ist in einer Nut 74 gehalten, die am Bund 70 zwischen einem Grat 72 und dem Bund 70 ausgebildet ist.

Der Nut 74 ist eine korrespondierende Erstreckung 30 an einem zweiten Halteabschnitt 26 des Kunststoffformteils 22 zugeordnet. Die radial einwärts ausgerichtete Erstreckung 30 vermag in einen Rasteingriff mit der Nut 74 zu treten, um das Kunststoffformteil 22 und damit die Presshülse 10 an den Bund 70 und damit an der Stützhülse 50 zu halten.

Der zweite Halteabschnitt 26 weist eine Schulter 27 auf, an die ein einzuführendes Rohrende anstoßen kann. Das Rohrende (nicht dargestellt) kann auf diese Weise von dem Bund 70 femgehalten werden, so dass kein unmittelbarer Kontakt hergestellt werden kann. Dies ist insbesondere für Metallrohre bzw. Rohre mit wenigstens einer Metallschicht wesentlich, um eine galvanische Trennung bewerkstelligen zu können.

In einem Übergangsbereich zwischen dem zweiten Halteabschnitt 26 und einem ersten Halteabschnitt 24, der der Presshülse 10 zugeordnet ist, ist wenigstens ein Sichtfenster 25 vorgesehen. Über dieses Sichtfenster 25 kann dann die Lage der Stirnseite des dicht festzulegenden Rohrendes (nicht dargestellt) an der Schulter 27 des ersten Halteabschnittes 26 überprüft werden.

Der erste Halteabschnitt 24 des Kunststoffformteils 22 ist an seinem dem Bund 70 abgewandten Ende mit einer radial einwärts ausgerichteten Erstreckung 28 versehen, die an der Presshülse 10 anliegt und diese hält. Die Erstreckung 28 weist einen abgeschrägten Einfügungsabschnitt 29 auf, der die Zusammenführung der Presshülse 10 mit dem ersten Halteabschnitt 24 des Kunststoffformteils 22 erleichtert. Eine entsprechende Formgebung, die das Einführen der Presshülse 10 in das Kunststoffformteil 22 erleichtern soll, ist auch an der Stirnseite der Presshülse 10 vorgesehen und mit dem Bezugszeichen 19 kenntlich gemacht.

Die geringe Haltekraft der Erstreckung 28 des Kunststoffformteils 22 in Verbindung mit der erhöhten Haltekraft der radial auswärts gerichteten Erstreckung 18 an der Presshülse 10 sorgt für eine besonders vorteilhafte Beweglichkeit bzw. Verschwenkbarkeit der Presshülse 10 gegenüber der Stützhülse 50. Hierbei sorgt zusätzlich der Freiraum 32 für eine ausreichend leicht gängige Beweglichkeit, während andererseits die Erstreckung 18 der Presshülse 10 in Verbindung mit der Erstreckung 28 des Kunststoffformteils 22 für eine ausreichende Barriere sorgt, so dass sich die Presshülse 10 von dem Kunststoffformteil 22 nicht unbeabsichtigt zu lösen vermag.

Diese Beweglichkeit kann sowohl zum Schutz der Presshülse 10 gegenüber übermäßigen Deformationen als auch als Hilfe zum Einführen eines Rohrendes in den Freiraum 40 zwischen der Presshülse 10 und der Stützhülse 50 eingesetzt werden.

## Patentansprüche

1. Verbindungsvorrichtung mit einer Leitungsverbindungseinrichtung (50, 70), die eine Stützhülse (50) und einen Anschlag und/oder Bund (70) umfasst,
mit einem Leitungsverbindungsabschnitt, insbesondere einer Presshülse (10), und
mit einem Kunststoffformteil (22), das den Leitungsverbindungsabschnitt (10) an der Leitungsverbindungseinrichtung (50, 70) hält,
wobei das Kunststoffformteil (22) mit einem ersten Halteabschnitt (24) zur Festlegung des Leitungsverbindungsabschnittes (10) an dem Kunststoffformteil (22) und mit einem zweiten Halteabschnitt (26) zur Festlegung des Kunststoffformteils (22) an der Leitungsverbindungseinrichtung (50, 70) ausgebildet ist, wobei der erste Halteabschnitt (24) eine radial, insbesondere einwärts, ausgerichtete Erstreckung oder Verstärkung (28) aufweist, an deren Position der Leitungsverbindungsabschnitt (10) gehalten ist, wobei der Leitungsverbindungsabschnitt (10) an einem der Erstreckung (28) des ersten Halteabschnitts (24) des Kunststoffformteils (22) zugeordneten axialen Ende am Außenumfang eine Erstreckung (18) aufweist, die an dem Innenumfang des Kunststoffformteils (22) anliegt und wobei an der Erstreckung (28) des ersten Halteabschnitts und an der radial auswärts gerichteten Erstreckung (18) des Leitungsverbindungsabschnitts (10) ein Freiraum (32) vorgesehen ist, **dadurch gekennzeichnet, dass** die Erstreckung (18) an dem Leitungsverbindungsabschnitt (10) eine axiale Längenerstreckung aufweist, wobei der Freiraum (32) in seiner axialen Abmessung in etwa ½-mal so groß bis etwa 1,5-mal so groß ist wie die Erstreckung (18) des Leitungsverbindungsabschnitts (10) in der gleichen axialen Richtung.

2. Verbindungsvorrichtung nach Anspruch 1, **dadurch gekennzeichnet, dass** das Kunststoffformteil (22) eine elastische Verformung ermöglicht, so dass die Presshülse (10) aus der axialen Längserstreckungsrichtung des Kunststoffformteils (22) auslenkbar ist, so dass die Längserstreckungsrichtung der Presshülse (10) nicht koaxial zu der des Formteils (22) und/oder der der Leitungsverbindungseinrichtung (50, 70) ist.

3. Verbindungsvorrichtung nach einem der Ansprüche 1 oder 2, **dadurch gekennzeichnet, dass** die Presshülse auf der der Erstreckung (18) gegenüberliegenden Seite aufgeweitet (12) ist, um die Einführung eines Leitungs- bzw. Rohrendes zu begünstigen.

4. Verbindungsvorrichtung nach einem der Ansprüche 1 bis 3, **dadurch gekennzeichnet, dass** die Presshülse wenigstens ein Sichtfenster aufweist.

5. Verbindungsvorrichtung nach einem der Ansprüche 1 bis 4, **dadurch gekennzeichnet, dass** der Leitungsverbindungsabschnitt bzw. die Presshülse auf der dem Kunststoffformteil (22) zugeordneten Seite am axialen Ende zulaufend (19) ausgebildet ist, um eine Zusammenführung mit dem Kunststoffformteil (22) zu begünstigen.

6. Verbindungsvorrichtung nach einem der Ansprüche 1 bis 5, **dadurch gekennzeichnet, dass** das Kunststoffformteil an der Erstreckung (28) mit einer radial einwärts zulaufenden Form (29) ausgebildet ist, um die Zusammenführung der Presshülse (10) mit dem Kunststoffformteil (22) zu erleichtern.

## Claims

1. A connecting piece having a pipe connection device (50, 70), which comprises a support sleeve (50) and a stop and/or collar (70),
having a pipe connection portion, especially a press sleeve (10), and
having a plastic fitting (22), which holds the pipe connection portion (10) on the pipe connection device (50, 70),
where the plastic fitting (22) is constructed with a first retaining portion (24) for fixing the pipe connection portion (10) to the plastic fitting (22) and with a second retaining portion (26) for fixing the plastic fitting (22) on the pipe connection device (50, 70), where the first retaining portion (24) comprises a radially, especially inwardly, oriented extension or reinforcement (28), at the position of which the pipe connection portion (10) is held, where at the outer periphery of an axial end associated with the extension (28) of the first retaining portion (24) of the plastic fitting (22) the pipe connection portion (10) has an extension (18) abutting on the inner periphery of the plastic fitting (22), and where a free space (32) is provided at the extension (28) of the first retaining portion and at a radially outwardly directed extension (18) of the pipe connection portion (10), **characterised in that** the extension (18) at the pipe connection portion comprises an axial longitudinal extension, where the axial dimension of the free space (32) is about ½ to about 1.5 times the size of the extension (18) of the pipe connection portion (10) in the same axial direction.

2. A connecting piece according to Claim 1, **characterised in that** the plastic fitting (22) enables an elastic deformation so that the press sleeve (10) can be moved out of the axial direction of longitudinal extension of the plastic fitting (22) so that the direction of longitudinal extension of the press sleeve (10) is not coaxial to that of the plastic fitting (22) and/or that of the pipe connection device (50, 70).

3. A connecting piece according to one of Claims 1 or 2**, characterised in that** the press sleeve is widened (12) at the side opposite the extension (18) to promote the introduction of a pipe or tube end.

4. A connecting piece according to one of Claims 1 to 3, **characterised in that** the press sleeve comprises at least one vision panel.

5. A connecting piece according to one of Claims 1 to 4, **characterised in that** the pipe connection portion or the press sleeve is constructed to taper (19) at the axial end on the side associated with the plastic fitting (22) in order to promote bringing into contact with the plastic fitting (22).

6. A connecting piece according to one of Claims 1 to 5, **characterised in that** the plastic fitting is constructed at the extension (28) with a radially inwardly tapering shape (29), in order to facilitate the bringing together of the press sleeve (10) and the plastic fitting (22).

## Revendications

1. Dispositif de raccord avec un équipement de raccord de conduite (50, 70) comprenant un manchon d'appui (50) et une butée et/ou un épaulement (70),
avec un tronçon de raccord de conduite, notamment un manchon serré (10),
et avec une pièce moulée en plastique (22)maintenant le tronçon de raccord de conduite (10) contre l'équipement de raccord de conduite (50, 70),
la pièce moulée en plastique (22) étant formée avec un premier segment de maintien (24) pour la fixation du tronçon de raccord de conduite (10) sur la pièce moulée en plastique (22), et avec un deuxième segment de maintien (26) pour la fixation de la pièce moulée en plastique (22) sur l'éiquipement de raccord de conduite (50, 70), le premier segment de maintien (24) présentant une extension ou un renforcement (28) radialement orienté, notamment vers l'intérieur, sur la position duquel est maintenu le tronçon de raccord de conduite (10), le tronçon de raccord de conduite (10) présentant à une extrémité axiale affectée à l'extension (28) du premier segment de maintien (24) de la piece moulée en plastique (22), sur le pourtour extérieur, une extension (18), laquelle est appliquée au pourtour intérieur de la piece moulée en plastique (22), sur l'extension (28) du premier segment de maintien et sur l'extension (18) orientée radialement ver l'extérieur du tronçon de raccord de conduite (10) un dégagement (32) étant prévu, **caractérisé en ce que** l'extension (18) présente sur le tronçon de raccord de conduite une extension longitudinale axiale, le dégagement (32) étant, dans sa dimension axiale, environ de ½ fois à 1,5 fois plus grand que l'extension (18) du tronçon de raccord de conduite (10) dans le même sens axial.

2. Dispositif de raccord selon la revendication 1, **caractérisé en ce que** la pièce moulée en plastique (22) permet une déformation élastique telle que le manchon serré (10) peut être dévié du sens axial d'extension longitudinale de la pièce moulée en plastique (22), si bien que le sens axial d'extension longitudinale du manchon serré (10) n'est pas coaxial à celui de la pièce moulée (22) et/ou à celui de l'équipement de raccord de conduite (50, 70).

3. Dispositif de raccord selon l'une des revendications 1 ou 2, **caractérisé en ce que** le manchon serré est élargi (12) sur le côté opposé à l'extension (18), pour favoriser l'introduction d'une extrémité de conduite ou de tuyau.

4. Dispositif de raccord selon l'une des revendications 1 à 3, **caractérisé en ce que** le manchon serré présente au moins un regard.

5. Dispositif de raccord selon l'une des revendications 1 à 4, **caractérisé en ce que** le tronçon de raccord de conduite ou le manchon serré est formé en coin (19) sur l'extrémité axiale du côté affecté à la pièce moulée en plastique (22), pour favoriser un assemblage avec la pièce moulée en plastique (22).

6. Dispositif de raccord selon l'une des revendications 1 à 5, **caractérisé en ce que** la pièce moulée en plastique est configurée sur l'extension (28) avec une forme (29) radialement inclinée vers l'intérieur, pour faciliter l'assemblage du manchon serré (10) avec la pièce moulée en plastique (22).
